# EUROPÄISCHE PATENTSCHRIFT

(11) **EP 2 373 473 B1**
(45) Veröffentlichungstag und Bekanntmachung des Hinweises auf die Patenterteilung: **21.06.2017**
(21) Anmeldenummer: 09760121.5
(22) Anmeldetag: 26.11.2009
(51) Int. Cl.: B29C 65/48, B29C 45/16, B29C 65/50, B60J 7/043, C08J 5/12, F16B 11/00

(54) **VERKLEBTES KUNSTSTOFF-VERBUNDBAUTEIL, VERFAHREN ZUR HERSTELLUNG DIESES SOWIE BAUTEIL AUS DIESEM.**
JOINED PLASTIC STRUCTURAL PART, PROCESS TO PRODUCE THIS AND COMPONENTS INCORPORATING SUCH A PART.
STRUCTURE COLLÉ EN PLASTIQUE, LE PRODUCTION DE CETTE STRUCTURE, AINSI QUE LES COMPOSANTS CONTENANT CETTE STRUCTURE.

(30) Priorität: 04.12.2008 EP 08021081
(43) Veröffentlichungstag der Anmeldung: 12.10.2011
(73) Patentinhaber: Covestro Deutschland AG, 51373 Leverkusen (DE)
(72) Erfinder: BRAMBRINK, Roland, 40880 Ratingen (DE); GROSSER, Ulrich, 51515 Kürten (DE); DORIN, Florian, 50679 Köln (DE)
(74) Vertreter: Levpat
(86) Internationale Anmeldenummer: PCT/EP2009/008454
(87) Internationale Veröffentlichungsnummer: WO 2010/063413

(56) Entgegenhaltungen:
- EP-A- 1 488 958
- EP-A2- 0 928 710
- WO-A-99/30913
- WO-A-2006/127372
- DE-A1- 10 237 322
- DE-A1- 10 361 096
- DE-A1- 19 842 456
- JP-A- 10 129 368
- JP-A- 62 001 524
- US-A1- 2006 243 382
- US-A1- 2007 261 787
- US-B1- 7 037 568

## Beschreibung

Die vorliegende Erfindung betrifft ein Kunststoff-Verbundbauteil, bestehend aus einem Kunststoffbauteil enthaltend eine Rippenstruktur und mit den Rippen verklebte Stützprofil(e), welche mit einer schmalen Seite auf dem Kunststoffgrundkörper stehen. Weiterhin betrifft die Erfindung ein Verfahren zur Herstellung eines solchen Verbundbauteils sowie Fertigteile, enthaltend solche Verbundbauteile als Komponenten.

Aus der DE-A 101 49 633 ist ein Verfahren zur Herstellung eines Verbundbauteiles aus einem Metallbauteil und einer Kunststoffstruktur bekannt, bei dem das Metallbauteil, das über mindestens eine Fläche mit mindestens einem Stanzrand oder Stanzkragen verfügt, und die Kunststoffstruktur mit Hilfe eines oder mehrerer Fügewerkzeuge zusammengepresst werden, wobei der Stanzrand/-kragen form- und kraftschlüssig in die Kunststoffstruktur eindringt oder diese durchdringt.

Bekannte Verbundbauteile oder Halbzeuge bestehen aus z.B. flächenhaften Verbunden, bei denen z.B. zwei Metallbleche mit Hilfe eines dazwischen liegenden Kunststoffs oder Kunststoffschaums zu einer Sandwich-Struktur verbunden werden (vgl. EP 489 320 A1, EP 285 974 A1 und EP 547 664 A2). Darüber hinaus gibt es Verfahren zur Herstellung von Verbundplatten mit außenliegenden Blechen und innenliegender Rippenstruktur (siehe EP 775 573 A2). Weiterhin gibt es ein Verfahren zum Verbinden von Blechen durch eine Kombination von Pressen und Spritzgießen in einem Werkzeug (EP 721831 A1). Außerdem sind noch Kunststoff/Metall-Verbundbauteile bekannt, bei denen Metallbleche durch Rippenstrukturen gestützt werden (EP 370 342 A2). In der EP 1 235 675 A1 sind Kunststoff-Verbundbauteile beschrieben, in denen zwei flächige Werkstücke aus unterschiedlichen Materialien in ihrem Randbereich über angeformten Kunststoff miteinander verbunden sind.

In dem oben beschriebenen Stand der Technik wird das Metallbauteil, zumeist ein Blech, an diskreten Punkten oder auch über größere Flächen formschlüssig mit dem Kunststoff verbunden, wodurch eine maximale Steifigkeit des Gesamtsystems gesichert werden soll. Zu diesem Zweck werden auch im Falle einer Verklebung oder Verschweißung die Bauteile möglichst fest aneinander gebunden, um Flexibilitäten in der Verbindungsstelle zu vermeiden und durch eine möglichst starre Ankopplung eine maximale Kraftübertragung der beiden Werkstoffpaare zu erzielen. Dieses Verhalten ist jedoch unter Temperatureinwirkung nachteilig, da zumeist Werkstoffe mit unterschiedlichen Wärmeausdehnungskoeffizienten gekoppelt werden und dies somit zu einem Verzug des Gesamtverbundes führt. Als Folge treten interne Spannungen auf, die eine Minderung der Eigenschaften des Kunststoffbauteils bewirken, die sich beispielsweise in Spannungsrissen und/oder in einem Versagen des gesamten Bauteils zeigen. Verfahren, die diesem Effekt des Verzugs entgegen wirken sollen, sind in WO 1997/003855, EP 1 174 299 A2 und US-A 4,881,773 beschrieben.

In der US 703 7 568 B1 werden Verbindungselemente beschrieben, die die Aufgabe übernehmen sollen, eine Folienhaut, z.B. aus Aluminium, mit einer stützenden Rippenstruktur zu verbinden. Dabei wird eine Oberfläche des Verbindungselementes an die Haut angeklebt, auf der gegenüberliegenden Seite wird in eine Vertiefung des Verbindungselementes eine Seite der Rippe eingeklebt. Die beschriebene Rippenstruktur übernimmt hier die stützende Basisfunktion für eine Haut, mit der sie über eine drittes Element - das Verbindungselement - verbunden ist. Die Materialien der einzelnen Elemente sind so ausgewählt, dass es nicht zu unterschiedlichen Wärmeausdehnungen kommt. Ein wesentliches Element der offenbarten Bauteile ist auch, dass die Rippe jeweils sowohl an ihrer Ober- als auch an ihrer Unterseite in einem Verbindungselement steckt, welches sie mit der umhüllenden Haut verbindet. Erst dadurch kann eine effektive Trägerfunktion übernommen werden.

In der DE 19842456 A1 wird ein Verfahren zur Vermeidung von Einfallstellen auf der Sichtseite eines (großflächigen) Kunststoffbauteils beschrieben. Dies wird mit Hilfe einer im 2-Komponentenspritzguss angebrachten Rippe erreicht. Eine Verbindung mit einem Stützprofil ist nicht vorgesehen.

In der EP 1 488 958 A1 wird ein Verfahren zur Verbindung von Bauteilen aus Kunststoff und Metall zu Dekorzwecken beschrieben. Die Verwendung der Metallteile als Stützprofile wie in der vorliegenden Erfindung offenbart, wird jedoch nicht beschrieben. Weitere Kunststoff-Verbunbauteile sind aus den Druckschriften WO 2006/127372 A und EP 0 928710 A2 bekannt. Bewegliche Dachöffnungssysteme, ob aus Glas oder Kunststoff hergestellt, werden zusätzlich versteift, um Steifigkeits- oder Festigkeitsanforderungen zu genügen. Hierbei werden heute bei bekannten Glasschiebedächern großflächige Blechprofile unter das Schiebedach geklebt. Die Blechprofile wurden zuvor durch Stanzen und/oder Tiefziehen hergestellt. Handelt es sich um transparente Dachsysteme, muss nachträglich ein Durchsichtbereich aus dem Blech gestanzt werden. Dies verursacht einen hohen Verschnitt. Zur Versteifung des Schiebedachsystems wird das Blechprofil derart verformt, dass sich Hohlräume zur Steigerung des Flächenträgheitsmomentes ergeben. Durch die große Fläche des eingesetzten Blechkörpers ist das System schwer.

Der vorliegenden Erfindung liegt die Aufgabe zugrunde, einen Kunststoff-Verbund bereitzustellen, bei dessen Herstellung oder Gebrauch keine Spannungs- oder Lastspitzen im Kunststoffbauteil auftreten. Das Auftreten von internen Spannungen, die zu Bauteilverzug und/oder Materialversagen führen können, soll vermieden werden, so dass auch amorphe Thermoplaste und spannungsrissempfindliche Kunststoffe eingesetzt werden können. Die versteiften Kunststoff-Verbundbauteile sollen durch effizienten Materialeinsatz ein möglichst geringes Gewicht besitzen sowie kostengünstig und mit einem möglichst einfachen Verfahren herstellbar sein. Gleichzeitig soll die Versteifungsstruktur insbesondere bei "Class-A" Oberflächen keine sichtbaren Störungen auf dem Kunststoffbauteil hervorrufen, wie sie bei Blecheinlegeteilen im Spritzguss entstehen können.

Der neuartig versteifte Kunststoff-Verbund soll sich für die Verwendung in Automobilverscheibungen, insbesondere für große Panoramadachsysteme oder bewegliche Dachöffnungssysteme, die die oben genannten Eigenschaften besitzen, eignen.

Der Erfindung liegt weiterhin die Aufgabe zugrunde, Verfahren zur Herstellung des neuartig versteiften Kunststoff-Verbundes bereitzustellen.

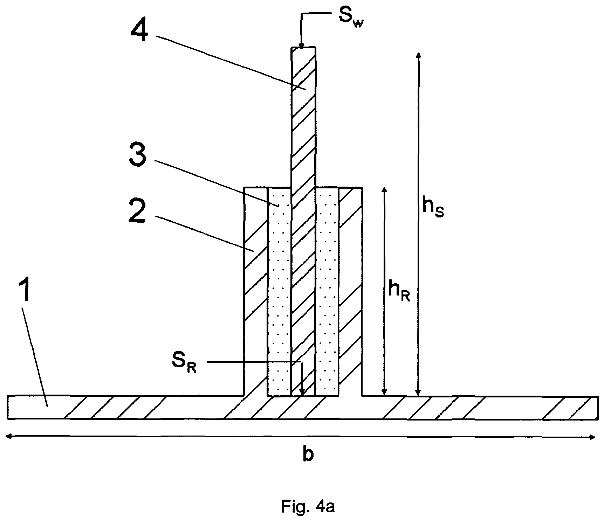

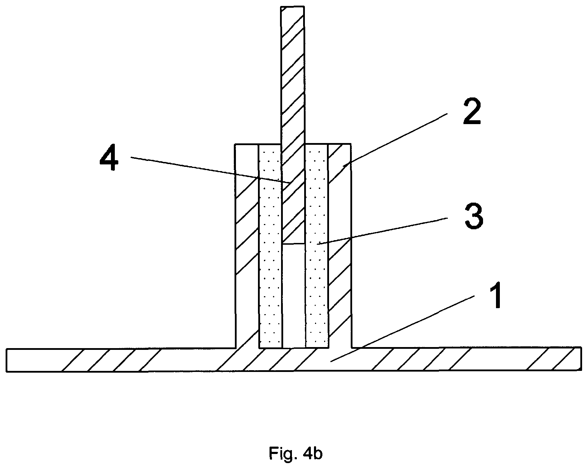

Diese Aufgaben werden durch die Merkmale der Ansprüche 1 und 11 gelöst. Durch die Kombination von besonderer Geometrie der Versteifungsstruktur und die Verwendung von Strukturklebstoffen als Kompensationsschicht zur Entkopplung von Kunststoff und Metall werden lokale Spannungsspitzen vermieden. Im Sinne der Erfindung bedeutet "steht auf dem Kunststoffgrundkörper", dass eine schmale Seitenfläche des Profils parallel zu der Fläche des Kunststoffgrundkörpers ist, entweder direkt aufliegend oder in einem leichten Abstand zum Grundkörper positioniert, sowie es in Fig. 4a (direkt aufliegend) und Fig. 4b (mit leichtem Abstand) beispielhaft für die Verwendung eines I-Profils gezeigt wird.

Ein Rippenpaar im Sinne der Erfindung besteht aus zwei nebeneinander laufenden Rippen, wobei der Verlauf dieser Rippen zueinander parallel oder mit veränderlichem Abstand sein kann. Gleiches gilt für den Verlauf der Rippen eines Rippenpakets im Sinne der Erfindung, welches aus zwei oder mehreren Rippen besteht. Zusammengehörige Rippen eines Rippenpaares können genauso wie alle Rippen der Rippenstruktur (R) gleiche oder unterschiedliche Höhen haben. Besteht die Rippenstruktur R aus mehreren Rippenpaketen, so richtet sich Anzahl und Anordnung dieser Rippenpakete zweckmäßigerweise nach Höhe und Art der zu erwartenden Anforderungen an das Fertigteil und and die Art und Höhe des einzuklebenden Stützprofils. In einer besonders bevorzugten Ausführungsform sind die Rippenpakete so angeordnet, dass die Belastung auf die gesamte Versteifungsstruktur verteilt wird und der Klebstoff auf einer möglichst großen Länge bevorzugt über Scherung belastet wird.

In bevorzugten Ausführungsformen sind zwei oder mehr Rippen jeweils parallel zueinander angeordnet, in anderen bevorzugten Ausführungsformen verlaufen zwei oder mehr Rippen in Teilbereichen konkav oder konvex zueinander.

In einer weiteren bevorzugten Ausführungsform befinden sich an den Rippen Führungs- oder Stützrippen und/oder weitere Führungs- oder Halteelemente zur Vereinfachung der Montage des Stützprofils (S).

Grundkörper (G) und Rippenstruktur (R) des Kunststoffbauteils (K) werden vorzugsweise im Spritzgussverfahren oder Extrusionsverfahren hergestellt und können aus demselben Material oder verschiedenen Materialien bestehen. Als Materialien kommen thermoplastische Kunststoffe infrage. Es eignet sich insbesondere ein unverstärkter, verstärkter und/oder gefüllter Kunststoff auf Basis von Polyamid (PA), Polyester, insbesondere Polyethylenterephthalat (PET), Polybutylenterephthalat (PBT), Polyacrylate, insbesondere Polymethylmethacrylat (PMMA), Polybutylenterephthalat (PBT), Polystyrol (PS), syndiotaktisches Polystyrol, Acrylnitril-Butadien-Styrol (ABS), Polyolefin, insbesondere Polypropylen (PP), Polyethylen (PE), Polycarbonat (PC), Copolycarbonat (CoPC), Copolyestercarbonat oder eine Mischung dieser Kunststoffe. Es handelt sich erfindungsgemäss bei den Kunststoffen um amorphe thermoplastische Kunststoffe wie Polycarbonat, Copolycarbonat, Copolyestercarbonat, PC-Blends und Polymethylmethacrylat. Es handelt sich bei den Kunststoffbauteilen K um fest verklebte oder auch bewegliche Kraftfahrzeug-Dachmodule, wie z.B. Panoramadächer mit einer Fläche von 0,5 m² - 1,5 m², die eine Breite b (Fig. 4a) aufweisen. Die Breite b beträgt bei einem Dachmodul mindestens 0,2 m, bevorzugt größer 0,4 m. Solche Dachmodule werden bevorzugt über Spritzgussverfahren hergestellt. Ähnliche Systeme mit Flächen größer als 0,5 m², bevorzugt größer als 1 m² lassen sich auch als Architekturverscheibung nutzen. Solche Verscheibungen werden bevorzugt über Extrusion hergestellt.

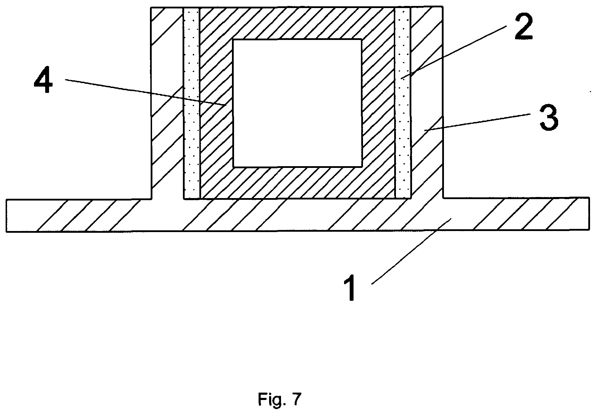

Das in die Rippenstruktur eingelegte Stützprofil S kann einteilig oder mehrteilig sein. Es kann entweder massiv oder mit Hohlräumen, Kanälen oder dergleichen, gefertigt sein. In einfachster und einer bevorzugten Ausführung ist das Stützprofil ein I-Profil, ein L-Profil oder ein T-Profil. Möglich ist auch ein U-Profil, welches z.B. auch Rippenpaare verbindet. Es kann ein geschlossenes Profil sein, z.B. ein Rechteckrohr. In diesem Fall können die Geometrien der schmalen und breiten Seitenflächen identisch sein (siehe Fig. 7). Bei einer entsprechenden Geometrie kann das Stützprofil z.B. einen oder mehrere Kanäle enthalten, die zur Aufnahme von Kabeln und Schläuchen oder zur Leitung von Flüssigkeiten oder Gasen genutzt werden können.

In Fig. 4a werden an einem Ausführungsbeispiel die Abmessungen des Verbundbauteils gezeigt. Dabei bedeuten:
- 1: Kunststoff-Grundkörper (G)
- 2: Rippe, Teil der Rippenstruktur (R)
- 3: Klebstoffschicht
- 4: Stützprofil (S)
- h_{S}: Höhe des Stützprofils
- h_{R}: Höhe der Rippe
- S_{w}: Seitenfläche des Profils, die von dem Kunststoff-Grundkörper wegweist
- S_{R}: Seitenfläche des Stützprofils, die zu dem Kunststoff-Grundkörper weist
- b: Breite des Kunststoff-Grundkörpers

Das Stützprofil kann in der Geometrie seiner Flächen den Rippen entsprechen, so dass das eingelegte Profil die gleiche Höhe (Fig.4a, h_{S}) wie die Rippen (Fig 4a, h_{R}) besitzt, es kann jedoch auch niedriger oder höher als die Rippen sein, so dass es gegebenenfalls über die Rippe bzw. aus dem Rippenpaket herausragt. Die Höhe h_{S} des Stützprofils S weist dabei höchstens das zweifache der Höhe h_{R} der Rippe auf, in einer anderen Ausführungsform besitzt es genau die einfache Höhe der Rippe. Die Geometrie des Stützprofils kann so ausgeführt sein, dass es weitere Funktionen z.B. als Befestigungselement übernehmen kann. In diesem Fall handelt es sich bei dem Stützprofil bereits um ein Halbzeug mit über die einfache Verstärkungsfunktion hinausgehenden Eigenschaften. Das Stützprofil kann ebenfalls so ausgeführt sein, dass eine kraft- und/oder formschlüssige Verbindung zu mindestens einem weiteren Bauteil über die Struktur des Stützprofils läuft.

Das Verhältnis der Höhe h_{R} der Rippe zu der Breite b des Kunststoff-Grundkörpers G beträgt im allgemeinen mindestens 1:10, bevorzugt 1:15 und insbesondere bevorzugt 1:30.

Erfindungsgemäß wird mindestens eine breite Seitenfläche des Stützprofils mit einer Rippe verklebt. Die schmale Seitenfläche S_{w} des Profils, die von dem Kunststoff-Grundkörper wegweist, ist entweder noch in die Rippe eingebettet oder steht frei. Die schmale Seitenfläche S_{R} des Stützprofils, die zu dem Kunststoff-Grundkörper weist, kann entweder auf ihm stehen oder in einem leichten Abstand h_{R} zum Grundkörper G, der bis zu dem 0,5fachen der Rippenhöhe betragen kann, positioniert sein. Diese beiden Ausführungsformen sind beispielhaft für ein I-Profil in Fig. 4a (direkt aufliegend) und Fig. 4b (mit leichtem Abstand) dargestellt. Erfindungsgemäß ist das Stützprofil S mit genau einem der oben beschriebenen Kunststoffbauteile K (enthaltend einen Kunststoff-Grundkörper G mit der Breite b und der Rippenstruktur R) verbunden. Die breite Seitenfläche des Profils und die Fläche des Kunststoffgrundkörpers stehen somit senkrecht oder annähernd senkrecht (in einem Winkel von ca. 70 - 110°) zueinander.

Das Stützprofil S kann aus metallischen, Faserverbund- oder keramischen Werkstoffen sein. Es kann durch Strangpressen, Stanzen, Tiefziehen, Rollformen oder sonstigen formgebende Prozesse hergestellt werden.

Bevorzugt wird das Stützprofil aus einem metallischen Werkstoff hergestellt. In einer besonders bevorzugten Ausführungsform handelt es sich bei dem Stützprofil um ein einfaches Verstärkungsprofil aus einem Blech vorzugsweise aus Stahl, Eisen, Titan, Aluminium oder Magnesium oder Legierungen dieser Metalle. In einer besonders bevorzugten Ausführungsform ist das Stützprofil ein gewalzter Bandstahl oder ein Aluminiumstrangpressprofil.

In anderen Ausführungsformen können die Profile auch aus Keramik, Duromeren oder Kunststoff-Komposit-Werkstoffen bestehen.

Bei dem zur Verklebung verwendeten Strukturklebstoff kann es sich um handelsüblichen Klebstoff handeln, wie er beispielsweise in der Automobilindustrie zur Verklebung von Scheiben oder Blechstrukturen genutzt wird. Es können sowohl Nassklebstoffe, Kontaktklebstoffe, Schmelzklebstoffe oder Reaktionsklebstoffe eingesetzt werden. Besonders geeignet für diese Technologie sind ein- oder zweikomponentige Strukturklebstoffe auf Polyurethanbasis mit unterschiedlichen Steifigkeiten. Es können jedoch auch z.B. Klebstoffe auf Acryl/Acrylat-, Methylmethacrylat-, Silikon oder Epoxidharzbasis verwendet werden. Im Rippenpaket kann die Klebstoffschicht eine Dicke bis zu mehreren Millimetern aufweisen. Die minimale Dicke der Klebstoffschicht wird durch Anforderungen an die Flexibilität der Klebstoffschicht und damit durch die Materialien und die Geometrie der Verbundbauteile sowie die Anforderungen an das Verbundbauteil vorgegeben. Durch unterschiedliche Abstände zwischen zwei Rippen, welche über Klebetechnik mit einem Stützprofil verbunden sind, lässt sich die Dicke der Klebstoffschicht einstellen, wodurch Art und Grad der Versteifung und Entkopplung flexibel eingestellt werden können. Es kann sich bei dem Klebstoff auch um einen thermoplastisch verarbeitbaren Schmelzkleber handeln. In diesem Fall ist es möglich, Kunststoff, Schmelzkleber und Stützprofil in einem Mehrkomponenten-Spritzgießgang zum Verbundbauteil zu verbinden.

Die Dicke der Klebstoffschicht ist abhängig von den zu erwartenden Belastungen. Sie ist nur indirekt abhängig oder unabhängig von den Dimensionen des Bauteils.

In einer bevorzugten Ausführungsform ist die Klebstoffschicht zwischen 0,5 - 10 mm dick. Gegebenenfalls können Klebstoff bzw. elastisches Verbindungsmaterial auch noch zusätzlich eine formschlüssige Verbindung eingehen. Bei kleineren Relativbewegungen zwischen den Verbundbauteilen dient der Klebstoff als Verbund- und Entkopplungselement. Hohe Belastungen werden von den Klebstoffflächen großflächig und nicht punktuell weitergeleitet, so dass es im Bauteil nicht zu Spannungsspitzen und den damit verbundenen Nachteilen kommt.

Ein weiterer Gegenstand der Erfindung ist ein Verfahren zur Herstellung eines solchen Kunststoff-Verbundbauteils, wobei das Kunststoffbauteil enthaltend einen Grundkörper und eine Rippenstruktur enthaltend mindestens eine Rippe oder mindestens ein Rippenpaar mittels Ein-, Zwei- oder Mehrkomponenten-Spritzguss- oder Extrusionsverfahren hergestellt wird, und weiterhin mindestens eine Fläche eines Stützprofils mit mindestens einer Rippenfläche über Klebetechnik verbunden wird. Wird ein Stützprofil mit zwei benachbarten Rippen verbunden, so kann es zunächst zwischen die Rippen eingelegt und anschließend eingeklebt werden. Es ist genauso möglich, den Klebstoff zuerst zwischen die Rippen zu pressen und anschließend das Stützprofil einzusetzen.

Ein anderes mögliches Herstellungsverfahren solcher Kunststoff-Verbundbauteile ist ein Mehrkomponenten-Spritzgussverfahren, bei dem das Stützprofil bereits in die entsprechende Form eingelegt ist und der Kunststoff sowie das thermoplastische Elastomer, welches Klebstofffunktion übernimmt, eingespritzt werden.

Das erfindungsgemäße Verbundbauteil hat den Vorteil, dass an die Geometrie des Stützprofils sehr geringe Anforderungen gestellt werden. Es können einfache Verstärkungsbleche eingelegt werden, Toleranzabweichungen können durch die Dicke der Klebstoffschicht ausgeglichen werden. Durch die einfache Geometrie entsteht kein Materialverschnitt und durch die vertikale Anordnung von Stützprofil und Hauptfläche des Grundkörpers wird weniger Stützprofil benötigt. Dies bedeutet einerseits Kosteneffizienz aufgrund geringerer Materialkosten und geringerer Herstellungskosten des Stützprofils, andererseits Gewichtsreduktion des Fertigteils. Mit Hilfe der Klebststoffschichten werden auftretende Belastungen großflächig und gleichmäßig im Kunststoff verteilt, so dass es nicht zum Auftreten von Spannungsspitzen kommt. Die neue Technologie ermöglicht somit auch die Versteifung von Bauteilen aus amorphen Thermoplasten mit Metallprofilen. Über die Rippengeometrie und die Klebstoffschichtdicken können Art und Grad der Versteifung und Entkopplung sehr flexibel eingestellt werden. Durch die dämpfenden Eigenschaften der Klebstoffschicht werden Schwingungen und Geräusche unterdrückt.

Die erfindungsgemäßen verstärkten Kunststoffbauteile können beispielsweise als Bauteile oder Bauteilkomponenten im Automobil-, Flugzeug-, Bahn- oder Schiffbau oder bei der Herstellung von Haushaltsgegenständen, -geräten oder Elektrogeräten verwendet werden. Anwendungsbeispiele sind das Architectural glazing (Gebäudeverscheibungen) und das Automotive glazing (Automobilverscheibung), hier insbesondere Dachmodule wie Panoramadächer. Weitere mögliche Anwendungen sind KFZ-Seitenverkleidungen, Autositzschalen und Kunststoffbauteile für Möbel, wie beispielsweise Stühle und Tische.

In einer bevorzugten Ausführungsform werden die Kunststoff-Verbundbauteile zur Herstellung von Automobilverscheibungen genutzt, insbesondere für große Panoramadach- oder bewegliche Dachöffnungssysteme.

Für die Herstellung von Automobilverscheibungen besitzt das Stützprofil bevorzugt Wandstärken von 0,5 - 5 mm und besonders bevorzugt von 0,8 - 3 mm.

Das hier beschriebene System kann zur Gewichtsreduktion des Dachsystems beitragen.

In einem Ausführungsbeispiel besteht ein erfmdungsgemäßes, im Zweikomponenten-Spritzgussverfahren hergestelltes Bauteil aus einer transparenten Komponente aus einem transparenten Kunststoff, beispielsweise Polycarbonat, und einer zweiten Komponente aus einem weiteren Kunststoff, beispielsweise einem PC-Blend, und enthält in den zu versteifenden Bereichen angespritzte Rippenpaare. Diese können den maximal zur Verfügung stehenden Bauraum in der Höhe ausnutzen. Im Anschluss an den Spritzgussprozess werden diese Bauteile zumeist mit einem Lacksystem beschichtet. Die üblichen Lacksysteme härten unter Temperatureinwirkung aus. Nach oder vor der Lackierung wird das Stützprofil zwischen die Rippenpaare des Grundkörpers eingelegt und durch zwischen den Rippen befindliche Stützrippen in Position gehalten. In einem Standard-Klebeverfahren, wie es zum Verkleben von KFZ-Scheiben oder Karosseriebauteilen genutzt wird, kann das Stützprofil nun mit dem Grundkörper verklebt werden. Die Montage der Verschiebekinematik kann im Anschluss durch bereits im Stützprofil befindliche Bohrungen realisiert werden. Bei dieser Art des Verfahrens wird die Kraft in das Stützprofil und nicht in den thermoplastischen Grundkörper eingeleitet.

Durch das geringere Gewicht des senkrecht zur Dachfläche stehenden Stützprofils im Vergleich mit den bisher üblichen, nach herkömmlichen Verfahren parallel montierten Verstärkungsblechen, können Gewichtsreduktionen von bis zu ca. 50% der Verstärkung realisiert werden.

Das erfindungsgemäße System zeigt eine besondere Flexibilität unter Wärmeeinwirkung. Dehnt sich der thermoplastische Grundkörper aus, so würde ein starr angekoppeltes Verstärkungssystem zu einem Verzug der Baugruppe führen. Der hier eingesetzte sehr dicke Klebstoff kann eine Relativbewegung zwischen Grundkörper und Verstärkungsprofil erlauben und reduziert den Verzug. Durch die Senkrechtstellung des Stützprofils, die jeweils große Länge der Klebeverbindung und die bevorzugte Lastabtragung unter Schub weist dieses System trotzdem eine hohe Gesamtsteifigkeit auf. Die Steifigkeit kann zusätzlich noch durch die jeweils angepasste Klebstoffdicke und Klebstoffsteifigkeit maßgeschneidert werden.

Durch die erfindungsgemäßen Verfahren können Verbundteile hergestellt werden, die keine Oberflächenstörungen zeigen, was insbesondere für "Class-A" Anforderungen wichtig ist.

Die beigefügten Zeichnungen sollen die Erfindungen beispielhaft näher erläutern, ohne sie jedoch auf diese Ausführungsformen zu beschränken. Es zeigen:
- Figur 1:: Ausschnitt eines Verbundbauteils in isometrischer Ansicht mit einem Grundkörper (1), der im thermoplastischen Spritzguss hergestellt wurde. Senkrecht zum Grundkörper (1) sind zwei parallel verlaufende Rippen (2) angeformt. Das Stützprofil (4) wird zwischen die beiden Rippen (2) gesteckt und mit Hilfe eines Strukturklebstoffs (3) mit den Rippen (2) verbunden. In dieser Ausführung haben die Rippen (2) jeweils die gleiche Höhe. Das Stützprofil (4) in Form eines I-Profils hat eine größere Höhe und ragt zwischen den Rippen (2) heraus.

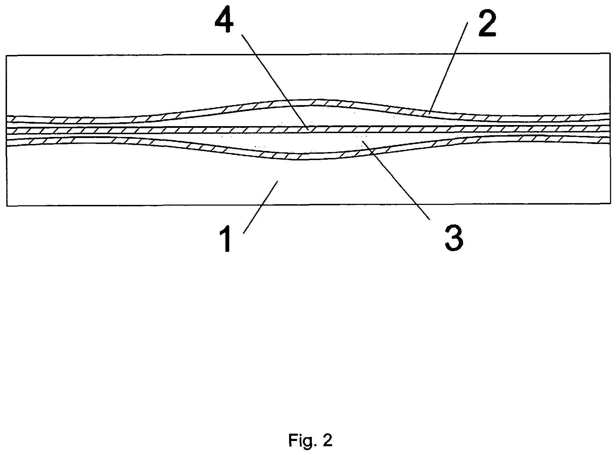

- Figur 2:: Ausschnitt eines Verbundbauteils in Draufsicht. Die hier gezeigte Ausführungsart weist zur Figur 1 den Unterschied der nicht zueinander parallel verlaufenden Rippen (2) auf. In dieser Ausführungsform verlaufen die Rippen (2) konvex zueinander, so dass der Strukturklebstoff (3) in der Mitte einen dickeren Bereich aufweist.

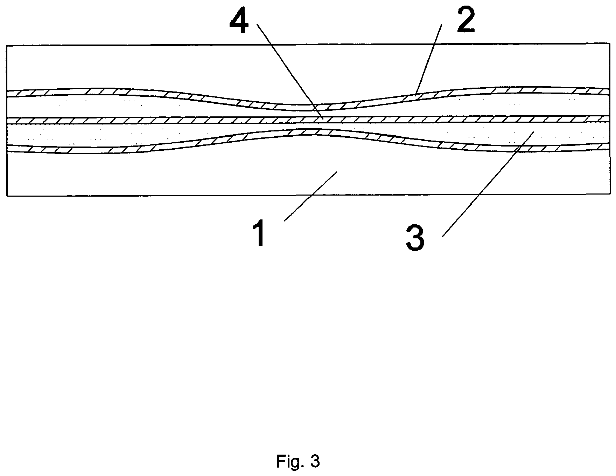

- Figur 3:: Ausschnitt eines Verbundbauteils in Draufsicht. Die hier gezeigte Ausführungsart weist zur Figur 1 den Unterschied der nicht zueinander parallel verlaufenden Rippen (2) auf. In dieser Ausführungsform verlaufen die Rippen (2) konkav zueinander, so dass der Strukturklebstoff (3) in der Mitte einen dünneren Bereich aufweist.
- Figur 4a:: Verbundbauteil aus Figur 1 im Querschnitt. Besonders markant sind hier die unterschiedlichen Höhen von Rippen (2) und Stützprofil (4), das in dieser Ausführungsvariante die Form eines I-Profils besitzt.
- Figur 4b:: Verbundbauteil ähnlich Figur 4a, jedoch ist hier das I-Profil mit leichtem Abstand zum Kunststoffgrundkörper positioniert.

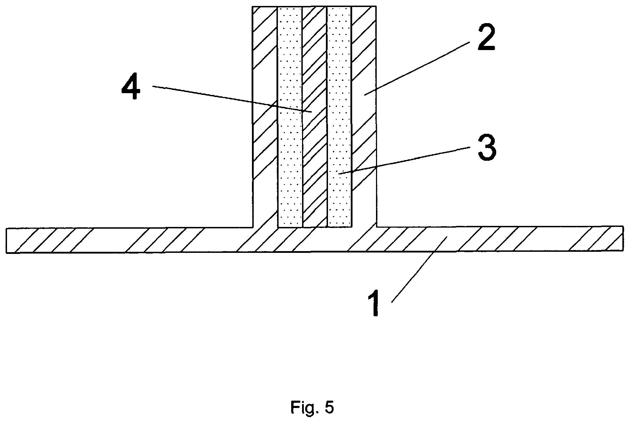

- Figur 5:: Verbundbauteil ähnlich Figur 4 im Querschnitt. In dieser Ausführungsvariante weisen sowohl das Stützprofil (4) als auch die Rippen (2) die gleiche Höhe auf.

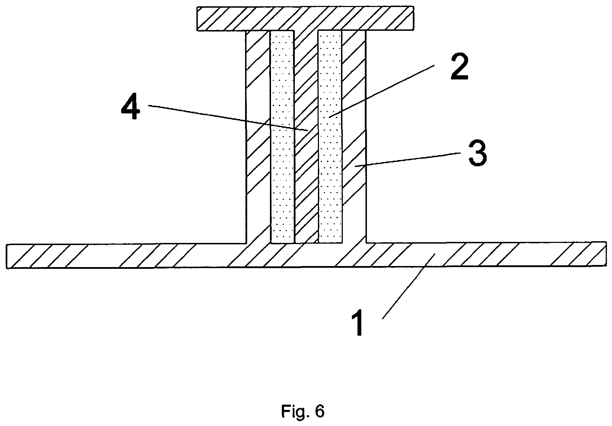

- Figur 6:: Verbundbauteil im Querschnitt. In dieser Ausführungsvariante wurde zur Verstärkung ein Stützprofil (4) als T-Profil mit einem Strukturklebstoff (3) an die Rippen (2) geklebt.
- Figur 7:: Verbundbauteil im Querschnitt. In dieser Ausführungsvariante wurde ein Hohlprofil rechteckigen Querschnitts als Stützprofil (4) verwendet. Der zu den Seiten hin geschlossene Kanal kann zur Aufnahme von Kabeln oder Schläuchen bzw. zur Leitung von Medien wie z.B. Gasen oder Flüssigkeiten genutzt werden.

Nachfolgend wird die Erfindung anhand eines weiteren Ausführungsbeispiels, in welchem die Herstellung eines erfindungsgemäßen Dachmoduls aus dem erfindungsgemäßen Verbundbauteil beschrieben wird, näher erläutert.

In diesem Ausführungsbeispiel besteht das erfindungsgemäße, im Zweikomponenten-Spritzgussverfahren hergestellte Bauteil aus einer transparenten Komponente enthaltend einen transparenten Kunststoff, in diesem Beispiel Polycarbonat. Die zweite Komponente besteht aus einem weiteren Kunststoff, in diesem Beispiel einem Polycarbonat-Blend. Der hier beschriebene Zweikomponenten-Spritzguss wird auf einer geeigneten Spritzgussmaschine durchgeführt, die mit einem Wendeplattenwerkzeug ausgerüstet ist.

In einem ersten Arbeitsschritt wird ein zur Spritzgussverarbeitung geeignetes Polycarbonat, z.B. Makrolon^{®} AG 2677, zu einer Platte mit den Dimensionen 600 mm x 800 mm im Spritzprägeverfahren verarbeitet, um ein eigenspannungsarmes Bauteil zu fertigen. Nach dem Spritzen der ersten Komponente mit einer Wanddicke von 5 mm öffnet sich das Werkzeug und dreht sich. Die soeben gespritzte erste Komponente verbleibt dabei in der Kavität der Wendeplatte und wird demnach mitgedreht. In einem weiteren Schritt wird durch eine zweite Spritzgusseinheit auf der gegenüberliegenden Seite ein weiterer thermoplastischer Kunststoff auf die erste Komponente aufgespritzt. Der Kunststoff der zweiten Komponente ist schwarz eingefärbt und besteht aus einem PC/ABS Blend, z.B. einem Bayblend^{®}T95MF. Die zweite Komponente ist nicht vollständig auf die erste Komponente aufgespritzt sondern nur in Form eines umlaufenden Rahmens, der in der Mitte ein transparenten Durchsichtbereich frei lässt. Die Platte aus transparentem Polycarbonat und die umlaufende zweite Komponente, die eine Breite von 200 mm und eine Dicke von 2.5 mm aufweist, stellen zusammen den Grundkörper G dar. In der zweiten, schwarz eingefärbten Komponente im gleichen Spritzgussschritt die Rippenstruktur R ausgebildet.

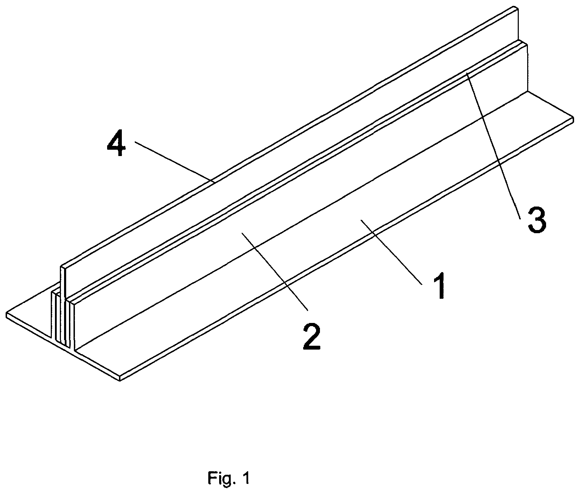

Die Rippen weisen ein günstiges Dickenverhältnis zum Grundkörper G (zweite Komponente) auf, damit Einfallstellen an der gegenüberliegenden Seite vermieden werden. Die Rippen haben eine Dicke am Rippenfuß von ca. 2 mm und weisen eine Höhe von 15 mm auf. In diesem Ausführungsbeispiel werden parallel verlaufende Rippen, wie in Fig. 1 dargestellt, hergestellt.

Die Rippenpaare verlaufen sowohl jeweils vorne und hinten, als auch rechts und links an den Außenseiten des Daches. In diesem Ausführungsbeispiel sind die Rippenpaare im rechten Winkel zueinander angeordnet aber nicht miteinander verbunden. In anderen Ausführungsbeispielen könnten die Rippenpaare in den Eckbereichen miteinander verbunden sein. In diesem Ausführungsbeispiel werden vier einzelne Stützprofile benötigt, für den Fall, dass die Rippenpaare aufeinander treffen, könnte sogar nur ein Stützprofil verwendet werden, das umlaufend zwischen die Rippen eingebracht wird.

Die eingebrachten Stützprofile dienen im vorderen und hinteren Bereich hauptsächlich der Versteifung des Daches. Rechts und links im seitlichen Bereich wird die Führungskinematik des Daches an das Stützprofil montiert, das für diesen Fall die passenden Bohrungen und Durchbrüche aufweist, um eine Verbindung mit dem Dachrahmen herzustellen. Die Montage der Verschiebekinematik kann im Anschluss durch bereits im Stützprofil befindliche Bohrungen realisiert werden. Bei dieser Art des Verfahrens wird die Kraft in das Stützprofil und nicht in den thermoplastischen Grundkörper eingeleitet.

Der Abstand der Rippen (Fig. 1, Ziffer 3) ergibt sich aus der Dicke des Stützprofils (Fig. 1, Ziffer 4) und des Klebstoffs (Fig. 1, Ziffer 2), der zwischen den Rippen platziert wird. Die Dicke des Stützprofils - hier ein I-Profil aus einem Stahlblech - für einen beweglichen Dachdeckel beträgt hier 1.5 mm und der Klebstoff weist zu beiden Seiten eine Dicke von 3 mm auf. Aus den Dicken des Klebstoffs und des Stützprofils ergibt sich ein Rippenabstand von 7.5 mm, bezogen auf die Innenflächen der Rippen. Senkrecht zu den Rippen werden durch den Spritzguss kleine Stützrippen ausgebildet. Diese stehen senkrecht zu den Rippen und zeigen in den Rippenzwischenraum der Rippenpaare. Die Höhe der Stützrippen beträgt ca. 1/3 der Rippenhöhe bei einer Wanddicke von 0.5 mm. Die Stützrippen dienen der Positionierung des Stützprofils für den Moment der Montage, bei dem noch kein Klebstoff zwischen die Rippen eingebracht wurde.

Im Anschluss an den Spritzgussprozess werden diese Bauteile mit einem Lacksystem beschichtet, um die Kratzfestigkeit und UV-Beständigkeit der Oberfläche zu erhöhen. Der Zwischenraum der Rippen bleibt hierbei lackfrei. Die üblichen Lacksysteme härten unter Temperatureinwirkung aus. Nach der Lackierung wird das Stützprofil, ein Blechstreifen mit einer Wanddicke von 1.5 mm, zwischen die Stützrippenpaare des Grundkörpers eingelegt und zwischen den Stützrippenpaaren fixiert. In einem Standard-Klebeverfahren, wie es zum Verkleben von KFZ-Scheiben oder Karosseriebauteilen genutzt wird, kann das Stützprofil nun mit den Rippen verklebt werden. In diesem Auführungsbeispiel wird das Stützprofil zwischen das Rippenpaar gesteckt, durch die Stützrippen in Position gehalten und in den verbleibenden Zwischenraum zwischen Rippen und Stützprofil wird ein zwei Komponenten-Polyurethan Klebstoff eingebracht. In einem alternativen Ausführungsbeispiel kann auch zuerst der Klebstoff zwischen das Rippenpaar eingebracht werden. Danach erfolgt das Eindrücken des Stützprofils zwischen die Rippen.

Dieses erfindungsgemäße KFZ-Dachmodul weist gegenüber einem Dachmodul mit einer standardmäßigen Verstärkung ein deutlich reduziertes Gewicht auf.

## Patentansprüche

1. Kunststoff-Verbundbauteil aus einem Kunststoff-Bauteil K, enthaltend einen flächigen Kunststoff-Grundkörper (1) und zusätzlich noch auf mindestens einer Seite eine Rippenstruktur (2), die mindestens eine Rippe oder mindestens ein Rippenpaar umfasst, welche mit mindestens einer Rippenfläche über Klebetechnik mit mindestens einer Profilfläche eines Stützprofils (4) so verbunden ist, dass das Stützprofil mit seiner schmalen Seite auf dem Kunststoff-Grundkörper oder mit einem leichten Abstand über dem Kunststoff-Grundkörper positioniert ist **dadurch gekennzeichnet, dass** die Klebstoffschicht eine Dicke von 1 bis 5 mm aufweist, wobei das Kunststoffbauteil aus einem oder mehreren amorphen thermoplastichen Kunststoffen ausgewählt aus der Gruppe bestehend aus Polycarbonat, Copolycarbonat, Copolyestercarbonat, PC-Blends und Polymethylmethacrylat besteht und es sich bei dem Kunststoffbauteil um ein fest verklebtes oder bewegliches Kraftfahrzeug-Dachmodul mit einer Fläche von 0,5 m² bis 1,5 m² oder eine Architekturverscheibung mit einer Fläche größer als 0,5 m² handelt.

2. Kunststoff-Verbundbauteil nach Anspruch 1, **dadurch gekennzeichnet, dass** das Stützprofil mit genau einem Kunststoff-Bauteil verbunden ist bzw. das Kunststoff-Verbundteil mehrere Stützprofile (4) enthält, die mit genau einem Kunststoff-Bauteil verbunden sind.

3. Kunststoff-Verbundbauteil nach einem der vorhergehenden Ansprüche, wobei das Verhältnis der Höhe der Rippenstruktur zu der Breite b des Kunststoff-Grundkörpers (1) mindestens 1:10, bevorzugt 1:15 und insbesondere bevorzugt 1:30 beträgt.

4. Kunststoff-Verbundbauteil nach Anspruch 1, dass es sich bei dem Klebstoff um einen Klebstoff auf Basis von Polyurethan, Acrylat, oder Silikon hergestellt wurde.

5. Kunststoff-Verbundbauteil nach Anspruch 1, dass die Höhe hs des Stützprofils höchstens das zweifache der Höhe hr der Rippe aufweist.

6. Kunststoff-Verbundbauteil , nach einem der Ansprüche 1 oder 2, **dadurch gekennzeichnet, dass** das Stützprofil ein Metallblech aus einem Metall ausgewählt aus Stahl, Eisen, Titan, Aluminium, Magnesium oder aus einer Legierung enthaltend mindestens eines dieser Metalle ist.

7. Kunststoff-Verbundbauteil nach Anspruch 1, **dadurch gekennzeichnet, dass** das Kunststoffbauteil aus einem amorphen thermoplastischen Kunststoff besteht.

8. Kunststoff-Verbundbauteil nach Anspruch 1, **dadurch gekennzeichnet, dass** an der Rippe oder an dem Rippenpaar noch weitere Stütz- und Halteelemente angebracht sind.

9. Kunststoff-Verbundbauteil nach Anspruch 1, **dadurch gekennzeichnet, dass** das Stützprofil ein Halbzeug mit über die Verstärkungsfunktion hinausgehenden Eigenschaften ist.

10. Kunststoff-Verbundbauteil nach Anspruch 8, **dadurch gekennzeichnet, dass** das Stützprofil zusätzlich Befestigungsfunktionen übernehmen kann.

11. Verfahren zur Herstellung eines Kunststoff-Verbundbauteils nach Anspruch 1, **dadurch gekennzeichnet, dass** der Kunststoffgrundkörper und die Rippenstruktur durch Ein-, Zwei- oder Mehrkomponentenspritzgießen hergestellt werden oder durch Extrusion hergestellt werden und mindestens eine Fläche eines Stützprofils mit mindestens einer Rippenfläche übe Klebetechnik verbunden wird.

12. Verfahren nach Anspruch 11, wobei ein Stützprofil, das mit zwei benachbarten Rippen verbunden wird, zunächst zwischen den Rippen eingelegt und anschließend verklebt wird.

13. Verfahren nach Anspruch 11 oder 12, wobei der Klebstoff zuerst zwischen die Rippen gepresst und anschließend das Stützprofil eingesetzt wird.

14. Verfahren zur Herstellung eines Kunststoff-Verbundbauteils nach Anspruch 11, **dadurch gekennzeichnet, dass** das gesamte Kunststoffverbundbauteil im Mehrkomponenten-Spritzgussverfahren hergestellt wird, wobei das Stützprofil in das Werkzeug eingelegt wird.

15. Verwendung eines Kunststoff-Verbundbauteils nach Anspruch 1 zur Herstellung von Autombil- oder Gebäudeverscheibungen, und insbesondere zur Herstellung eines KFZ-Dachmoduls.

16. Automobil- oder Gebäudeverscheibung, insbesondere ein KFZ-Dachmodul, enthaltend mindestens ein Kunststoff-Verbundbauteil nach Anspruch 1 als Bauteilkomponenten.

## Claims

1. Composite plastics structural member comprising a plastics structural member K containing a flat plastics base body (1) and additionally, on at least one side, also a rib structure (2) which comprises at least one rib or at least one pair of ribs and which is joined by means of at least one rib surface, by adhesive technology, to at least one profile surface of a support profile (4) in such a manner that the narrow side of the support profile is positioned on the plastics base body or at a slight distance above the plastics base body, **characterized in that** the adhesive layer has a thickness of from 1 to 5 mm, wherein the plastics structural member consists of one or more amorphous thermoplastic plastics selected from the group consisting of polycarbonate, copolycarbonate, copolyester carbonate, PC blends and polymethyl methacrylate and the plastics structural member is a firmly bonded or movable motor vehicle roof module having an area of 0.5 m² to 1.5 m² or an architectural glazing unit having an area of greater than 0.5 m².

2. Composite plastics structural member according to Claim 1, **characterized in that** the support profile is joined to precisely one plastics structural member or the composite plastics member comprises a plurality of support profiles (4) which are joined to precisely one plastics structural member.

3. Composite plastics structural member according to either one of the preceding claims, wherein the ratio of the height of the rib structure to the width b of the plastics base body (1) is at least 1:10, preferably 1:15 and particularly preferably 1:30.

4. Composite plastics structural member according to Claim 1, **characterized in that** the adhesive is an adhesive which has been produced based on polyurethane, acrylate or silicone.

5. Composite plastics structural member according to Claim 1, **characterized in that** the height hs of the support profile is at most twice the height hr of the rib.

6. Composite plastics structural member according to either Claim 1 or Claim 2, **characterized in that** the support profile is a metal sheet made of a metal selected from steel, iron, titanium, aluminium, magnesium or from an alloy containing at least one of those metals.

7. Composite plastics structural member according to Claim 1, **characterized in that** the plastics structural member consists of an amorphous thermoplastic plastic.

8. Composite plastics structural member according to Claim 1, **characterized in that** further support and holding elements are attached to the rib or to the pair of ribs.

9. Composite plastics structural member according to Claim 1, **characterized in that** the support profile is a semi-finished product with properties extending beyond the reinforcing function.

10. Composite plastics structural member according to Claim 8, **characterized in that** the support profile can additionally carry out fastening functions.

11. Method for the production of a composite plastics structural member according to Claim 1, **characterized in that** the plastics base body and the rib structure are produced by one-, two- or multi-component injection moulding or are produced by extrusion and at least one surface of a support profile is joined to at least one rib surface by adhesive technology.

12. Method according to Claim 11, wherein a support profile joined to two adjacent ribs is first inserted between the ribs and then adhesively bonded.

13. Method according to Claim 11 or 12, wherein the adhesive is first pressed between the ribs and then the support profile is introduced.

14. Method for the production of a composite plastics structural member according to Claim 11, **characterized in that** the entire composite plastics structural member is produced by the multi-component injection moulding process, the support profile being placed in the tool.

15. Use of a composite plastics structural member according to Claim 1 in for production of automotive or architectural glazing, and in particular in the production of a motor vehicle roof module.

16. Automotive or architectural glazing, in particular a motor vehicle roof module, containing at least one composite plastics structural member according to Claim 1 as structural member components.

## Revendications

1. Composant composite en plastique constitué par un composant en plastique K, contenant un corps de base en plastique plat (1) et également sur au moins un côté une structure nervurée (2), qui comprend au moins une nervure ou au moins une paire de nervures, qui est reliée avec au moins une surface de nervure par une technique de collage avec au moins une surface de profilé d'un profilé support (4), de sorte que le profilé support soit positionné avec son côté étroit sur le corps de base en plastique ou avec un léger écart au-dessus du corps de base en plastique, **caractérisé en ce que**
la couche adhésive présente une épaisseur de 1 à 5 mm, le composant en plastique étant choisi parmi un ou plusieurs plastiques thermoplastiques amorphes du groupe constitué par le polycarbonate, le copolycarbonate, le copolyester-carbonate, un mélange de PC et le polyméthacrylate de méthyle, et le composant en plastique consistant en un module de toit d'automobile ayant une surface de 0,5 m² à 1,5 m² ou un vitrage architectural ayant une surface supérieure à 0,5 m².

2. Composant composite en plastique selon la revendication 1, **caractérisé en ce que** le profilé support est relié avec exactement un composant en plastique ou la pièce composite en plastique contient plusieurs profilés supports (4), qui sont reliés avec exactement un composant en plastique.

3. Composant composite en plastique selon l'une quelconque des revendications précédentes, dans lequel le rapport entre la hauteur de la structure nervurée et la largeur b du corps de base en plastique (1) est d'au moins 1:10, de préférence 1:15 et de manière particulièrement préférée 1:30.

4. Composant composite en plastique selon la revendication 1, **caractérisé en ce que** l'adhésif est un adhésif à base de polyuréthane, d'acrylate ou de silicone.

5. Composant composite en plastique selon la revendication 1, **caractérisé en ce que** la hauteur hs du profilé support est d'au plus deux fois la hauteur hr de la nervure.

6. Composant composite en plastique selon l'une quelconque des revendications 1 ou 2, **caractérisé en ce que** le profilé support est une tôle métallique en un métal choisi parmi l'acier, le fer, le titane, l'aluminium, le magnésium ou en un alliage contenant au moins un de ces métaux.

7. Composant composite en plastique selon la revendication 1, **caractérisé en ce que** le composant en plastique est constitué par un plastique thermoplastique amorphe.

8. Composant composite en plastique selon la revendication 1, **caractérisé en ce que** des éléments de support et de maintien supplémentaires sont encore appliqués sur la nervure ou sur la paire de nervures.

9. Composant composite en plastique selon la revendication 1, **caractérisé en ce que** le profilé support est un semi-fini qui présente des propriétés dépassant la fonction de renforcement.

10. Composant composite en plastique selon la revendication 8, **caractérisé en ce que** le profilé support peut en outre avoir des fonctions de fixation.

11. Procédé de fabrication d'un composant composite en plastique selon la revendication 1, **caractérisé en ce que** le corps de base en plastique et la structure nervurée sont fabriqués par moulage par injection à un ou deux composants ou plus ou sont fabriqués par extrusion, et au moins une surface d'un profilé support est reliée avec au moins une surface de nervure par une technique de collage.

12. Procédé selon la revendication 11, dans lequel un profil support qui est relié avec deux nervures voisines est tout d'abord inséré entre les nervures, puis collé.

13. Procédé selon la revendication 11 ou 12, dans lequel l'adhésif est tout d'abord pressé entre les nervures, puis le profilé support est inséré.

14. Procédé de fabrication d'un composant composite en plastique selon la revendication 11, **caractérisé en ce que** l'ensemble du composant composite en plastique est fabriqué par un procédé de moulage par injection à plusieurs composants, le profilé support étant introduit dans le moule.

15. Utilisation d'un composant composite en plastique selon la revendication 1 pour la fabrication de vitrages d'automobiles et de bâtiments, et notamment pour la fabrication d'un module de toit automobile.

16. Vitrage d'automobile ou de bâtiment, notamment module de toit automobile, contenant au moins un composant composite en plastique selon la revendication 1 en tant que composant.
